(19) **Europäisches Patentamt**
**European Patent Office**
**Office européen des brevets**

(11) **EP 2 798 346 B1**

(12) **EUROPEAN PATENT SPECIFICATION**

(45) Date of publication and mention
of the grant of the patent:
**15.04.2020 Bulletin 2020/16**

(51) Int Cl.:
*G01N 29/14* *(2006.01)*    *G01N 29/30* *(2006.01)*

(21) Application number: **12813658.7**

(86) International application number:
**PCT/US2012/070815**

(22) Date of filing: **20.12.2012**

(87) International publication number:
**WO 2013/101634 (04.07.2013 Gazette 2013/27)**

(54) **SYSTEM AND METHOD FOR AN ACOUSTIC MONITOR SELF-TEST**

SYSTEM UND VERFAHREN ZUM SELBSTTESTEN EINES AKUSTISCHEN MONITORS

SYSTÈME ET PROCÉDÉ POUR AUTO-EXAMEN DE DISPOSITIF DE SURVEILLANCE ACOUSTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2011 US 201113337536**

(43) Date of publication of application:
**05.11.2014 Bulletin 2014/45**

(73) Proprietor: **UTC Fire & Security Corporation Farmington, Connecticut 06032 (US)**

(72) Inventors:
• **HERMANN, Theodore, M.**
  **Eden Prairie, MN 55347 (US)**
• **RADOMSKI, James V.**
  **New Brighton, MN 55112 (US)**

(74) Representative: **Schmitt-Nilson Schraud Waibel Wohlfrom**
**Patentanwälte Partnerschaft mbB**
**Pelkovenstraße 143**
**80992 München (DE)**

(56) References cited:
**US-A1- 2006 191 341**

• DUNCAN M G ET AL: "ACOUSTIC EMISSION CALIBRATION INSTRUMENTATION", IEEE TRANSACTIONS ON INSTRUMENTATION AND MEASUREMENT, IEEE SERVICE CENTER, PISCATAWAY, NJ, US, vol. 38, no. 3, 1 June 1989 (1989-06-01), pages 827-831, XP000036792, ISSN: 0018-9456, DOI: 10.1109/19.32202

## Description

FIELD OF INVENTION

The subject matter disclosed herein relates generally to the fields of machinery condition monitoring, acoustics, and digital signal processing, and more particularly, to an acoustic monitor which periodically generates an acoustic test signal, having a known frequency and sound pressure level (SPL), for self-testing the acoustic monitor by computing the real-time power spectrum of the acoustic test signal while preventing other nearby acoustic monitors from alarming.

DESCRIPTION OF RELATED ART

Industrial operations, such as well drilling, oil production, oil refining, gas production, and petrochemical manufacturing, utilize piping to move a wide variety of flammable hydrocarbon gases and liquids under high pressure. These facilities also employ various types of pressure vessels, such as chemical reactors, heat exchangers, and storage tanks, which also may contain these potentially explosive gases and liquids. The piping and pressure vessels must be continuously monitored for leaks, to avoid creating a hazardous condition. Additionally, these industrial operations utilize heavy machinery and equipment that generates mostly audible sound, in the frequency range of 20 Hz up to about 20 kHz. In addition to producing an audible hiss or rushing sound, a pressurized gas leak produces a sound signal which extends into the lower part of the ultrasonic frequency range, from about 20 kHz up to about 80 kHz.

Gas leak detectors utilizing acoustic technology have been devised to measure the airborne sound pressure waves generated by the rapid expansion and resulting turbulent flow of gas escaping from a high pressure to atmospheric pressure. Prior art acoustic leak detectors are essentially ultrasonic sound level meters with programmable alarm levels and relay outputs. They do not perform any spectral analysis of the acoustic signal, but rather, consider any signal of sufficient amplitude in the frequency range of interest, generally 25 kHz to 70 kHz, to be a gas leak. These gas leak detectors are typically housed in explosion-proof enclosures to prevent ignition of any escaped gases within hazardous locations. An alternative approach in hazardous locations is to utilize Intrinsically Safe (IS) circuitry, where the electrical energy levels involved are incapable of igniting a fuel-air mixture under worst-case conditions.

Additionally, these detectors must be self-tested in order to ensure functionality and achieve Safety Integrity Levels (SIL) appropriate for detecting pressurized gas leaks in hazardous locations. Since the detector is exposed to the environment, it is possible that ice or dust build-up on the microphone may attenuate the acoustic signal, thus reducing the sensitivity of the detector and possibly preventing an alarm from occurring during an actual gas leak. Therefore, an important objective of the self-test is that the entire acoustic and electrical signal path be tested, that is, proper operation of the microphone itself must be verified. One known method of self-testing a detector involves using a piezoelectric transducer, mounted in close proximity to the microphone, to generate, at predetermined intervals and for a predetermined time, either a single frequency or narrowband acoustic test signal within the frequency sensing range of the detector. The detector indicates a fault if the amplitude of the signal received by the microphone does not fall within a given tolerance range. In prior art detectors, the acoustic test signal is generated by a fixed-frequency acoustic sound source, such as an emitter, usually operating at 40 kHz, and producing a fixed SPL of about 90 dB or higher. This relatively high output is required to ensure that the acoustic test signal is detected under conditions where the background noise is significant at the emitter frequency. It has been demonstrated that this method of self-test has the potential to cause a false alarm in nearby detectors of similar design.

Other prior art detectors do not have the ability to move the acoustic test signal to a relatively inactive portion of the power spectrum, or even know where that is, so they cannot reduce the emitter output to the lowest level necessary to perform the self-test. Another serious limitation of prior art detectors is that their critical safety function must be disabled during the self-test, since, without knowing the power spectrum of the signal received by the microphone, an acoustic test signal is indistinguishable from a signal produced by a gas leak. Another method of self-test utilizes measurement of the background noise to determine if the detector is operational. If the background noise is not detected, or if it has dropped significantly and unexpectedly, then the detector indicates a fault. But the detector must have a very high sensitivity, otherwise this method of self-test will not work in quiet environments. Therefore, a need exists for an acoustic monitor and method of self-test that overcomes the limitations of the prior art.

US 2006/191341 A1 discloses an ultrasonic gas leak detector of the kind where a detector transducer senses airborne acoustic ultrasonic sound waves emitted from a leakage in a gas installation. The detector is provided with self-test means according to which an ultrasonic signal is emitted by a test transducer provided as an integral part of the detector, this signal being received by the detector transducer. By these means an ongoing self-test of the performance of the essential components of the detector, e.g. the detector transducer itself, the various electronic circuits of the detector, etc., can be carried out and an alert signal can for instance be transmitted to a central alarm system if inappropriate performance of the detector is discovered.

BRIEF SUMMARY

According to one aspect of the invention, a system for self-testing an acoustic monitor is defined in claim 1.

According to another aspect of the invention, a method of self-testing an acoustic monitor is defined in claim 9.

Other aspects, features, and techniques of the invention will become more apparent from the following description taken in conjunction with the drawings.

## BRIEF DESCRIPTION OF THE SEVERAL VIEWS OF THE DRAWINGS

Referring now to the drawing wherein like elements are numbered alike in the FIGURE:

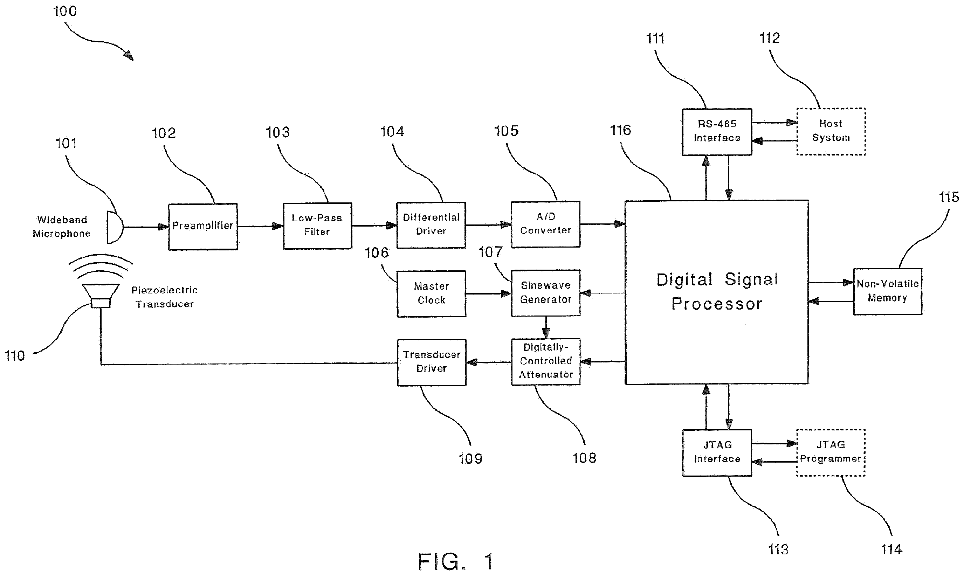

FIG. 1 illustrates a functional block diagram showing the hardware elements of the acoustic monitor according to an embodiment of the invention.

## DETAILED DESCRIPTION

Embodiments of an acoustic monitor having an acoustic signal source for implementing a self-test are described herein. The acoustic monitor generates acoustic test signals having a frequency associated with a relatively inactive portion of the power spectrum and a sound pressure level providing an optimum signal-to-noise ratio (for example, signal-to-noise ratio exceeding a minimum threshold) at the test frequency. The acoustic test signal is determined by the digital signal processor, based on the power spectrum of the background noise, in order to provide differentiation between the acoustic test signal and the background noise. The acoustic monitor includes a digital signal processor (DSP) to continuously compute the power spectrum of an acoustic signal received by a microphone. The processor also performs, in some non-limiting examples, communication with a host system or human operator, control of the acoustic monitor, and acoustic self-test periodically during operation. Also, the acoustic self-test includes the entire acoustic and electrical signal path for verification of the proper operation of the microphone. This is done by generating an acoustic signal having a known frequency and sound pressure level (SPL), and comparing the actual signal received by the monitor with the expected signal.

Referring now to the drawings, FIG. 1 illustrates a functional block diagram of an acoustic monitor 100, showing the various analog and digital signal paths. For simplicity, the required power supplies are not shown, along with other details not needed to understand the invention. Analog processing of the acoustic signal from the piezoelectric transducer 110 begins with wideband microphone 101, which converts pressure variations sensed by a diaphragm into a corresponding electrical signal. In an embodiment, microphone 101 is a pre-polarized condenser microphone, having a frequency response up to about 80 kHz, and a dynamic range which can accommodate the high sound pressure levels (SPL) typically found in industrial environments. Other types of microphones may also be employed, without departing from the scope of the invention. The output of microphone 101 is a very low-level, very high impedance signal which is susceptible to electrical noise pickup; therefore, the signal conductor and preamplifier circuitry is shielded. Preamplifier 102 amplifies the microphone signal and converts it to a low impedance. Ideally, most, if not all, of the voltage gain in the analog signal path can be provided by the preamplifier, so that electrical noise introduced by the following stages has a negligible effect on the overall signal-to-noise ratio. Low-pass filter 103 attenuates frequencies above the frequency range of interest, generally 20 Hz to 80 kHz, to prevent aliasing by the subsequent sampling process. Some of the required low-pass filtering of the acoustic signal can be provided by microphone 101 itself, as its frequency response generally rolls off quite sharply above 80 kHz. The single-ended signal leaving low-pass filter 103 is next converted to a differential signal by differential driver 104, for the purpose of driving A/D converter 105, which samples the analog signal at regular intervals. In the preferred embodiment, A/D converter 105 has a resolution of 18 bits, and high-resolution A/D converters generally require differential analog inputs, to reject common-mode noise. However, other types of A/D converters, or A/D converters having a different resolution, may also be employed, without departing from the scope of the invention. The digital data stream leaving A/D converter 105 is fed to digital signal processor 116, which implements a multi-rate bank of digital band-pass filters to compute the real-time power spectrum of the acoustic signal received by microphone 101.

Signal generation for the acoustic monitor self-test is accomplished by feeding a square wave, having a suitable frequency, from master clock 106 to programmable waveform generator 107, which uses direct digital synthesis (DDS) to generate a sine wave having a frequency controlled by digital signal processor 116. Other methods of sine wave generation could also be employed without departing from the scope of the invention. The amplitude of the sine wave fed to transducer driver 109 is determined by digitally-controlled attenuator 108, which itself is controlled by digital signal processor 116. In the preferred embodiment, transducer driver 109 has dual complementary outputs, thereby eliminating the DC output component, and doubling the output voltage swing, for a given power supply voltage. Transducer driver 109 drives piezoelectric transducer 110, which is positioned in close proximity to microphone 101, so that the acoustic test signal is received with a high signal-to-noise ratio. Other types of electro-acoustic transducers, such as a miniature dynamic loudspeaker, may also be used without departing from the scope of the invention.

Digital signal processor 116 (DSP) communicates with host system 112 by means of RS-485 interface 111, using half-duplex serial communication. Host system 112 may be a personal computer, programmable logic controller, custom device, or any other system having a processor with memory for storing instructions capable of implementing the required communication protocol. Initiation and control of the acoustic monitor self-test may be done by digital signal processor 116, or by host system 112, without departing from the scope of the invention.

In an embodiment, the DSP 116 is a 500 MHz ADSP-BF533 16/32-bit fixed-point processor optimized for DSP applications, manufactured by Analog Devices, Inc. However, other processors, having different architectures, word sizes, instruction rates, and features, may also be suitable, and may be employed, without departing from the spirit and scope of the invention. After receiving a reset signal from a reset generator (not shown), DSP 116 copies machine language instructions from non-volatile memory (NVM) 115 to its on-chip program memory. After all of the instructions have been copied, DSP 116 begins executing the instructions, now residing in its program memory. This process, known as booting, is necessary because DSP 116 executes the instructions at a very fast rate, and it is much faster to fetch and execute instructions from on-chip memory than from a relatively slow external memory device. In the preferred embodiment, NVM 115 is a flash memory; however, other types of non-volatile memory, such as EEPROM, may also be suitable. In addition to functioning as the boot memory, NVM 115 is also written and read by DSP 116 to maintain a copy of data which must accompany the acoustic monitor. This data includes reference values for the self-test, measured during self-calibration at the factory, as well as serial number, date of manufacture, firmware revision, and other production information. Finally, JTAG interface 113 provides access to the internal registers and memory of DSP 116, enabling in-system programming of NVM 115 by JTAG programmer 114 (only connected to the acoustic monitor during programming). During firmware development and testing, JTAG interface 113 also serves as the connection point for a JTAG emulator (not shown).

Also shown in FIG. 1, acoustic monitor 100 includes a host system 112 in communication with DSP 116 for implementing, in one embodiment, the self-test mode of operation. Particularly, host system 112 includes a microcontroller with a computer program stored in non-volatile memory for initiating the self-test of the acoustic monitor 100 in addition to determining the alarm condition during operation of acoustic monitor 100. Since host system 112 has spectral knowledge of the acoustic test signal, determination of the alarm condition continues uninterrupted during the self-test. In one embodiment, DSP 116 communicates with the host system 112 via the RS-485 communication device 111 using an RS-485 communication protocol operating at 115.2 k bits/second by sending the power spectrum for the acoustic signal that is utilized by the host system 112 to determine an alarm condition. In another embodiment, the host system 112 receives the power spectrum for the acoustic signal for storage in an optional micro SD mobile storage device (not shown). Under control of the host system 112, the acoustic monitor 100 initiates a self-test at periodic intervals by comparing the real-time power spectrum of the acoustic signal with the reference values stored in non-volatile memory 115 that were obtained during the self-calibration mode. In the self-calibration mode at the factory, the DSP 116, under the control of host system 112, steps the acoustic test signal through an entire 144 filter or frequency bands (i.e., 1/12th octave digital band-pass filtering over 12 octave range) at full power output while measuring the acoustic power received by microphone 101 at each test frequency. Since the DSP 116 computes the power spectrum of the acoustic signal using 1/12th octave digital band-pass filtering, the DSP 116, under the control of host system 112, steps the sine wave generator 107 through the mid-band frequencies of each of the 144 filter bands. For each of the 144 filter bands, samples for the appropriate octave are first processed by sixth-order 1/12th octave Butterworth band-pass filters over a twelve-octave range for the 144 filtered frequency bands and converted to a decibel (dB) representation by DSP 116, using a binary (base 2) logarithm computation. In this self-calibration mode, the acoustic power, in decibels, at each test frequency, is stored in the non-volatile memory 115 by DSP 116.

In operation, analog and digital signal flow through the acoustic monitor 100 begins at microphone 101, where an acoustic signal, which may also include an acoustic test signal generated by piezoelectric transducer 110, is converted to a corresponding electrical signal. Under the control of its processor, an acoustic monitor or detector periodically activates an acoustic signal source in close proximity to the microphone. In an embodiment, the acoustic sound source is a piezoelectric transducer or emitter; however, other types of electroacoustic transducers may also be suitable. To generate a test tone, the emitter is driven by a sinusoidal signal of sufficient amplitude to produce the desired SPL. The preferred source for the sinusoidal signal is a commercially-available direct digital synthesis (DDS) integrated circuit, such as the AD9833 Low Power Programmable Waveform Generator, manufactured by Analog Devices, Inc. The waveform generator is followed by a digitally-controlled attenuator, and then a power amplifier, which drives the emitter. The power amplifier preferably has dual complimentary outputs, which permit a bridge-tied load (BTL) output configuration, thus doubling the peak-to-peak output voltage swing, for a given power supply voltage. The processor controls the waveform generator and attenuator, and thus the frequency and amplitude of the sinusoidal signal driving the emitter. Since the monitor computes the power spectrum of the acoustic signal using fractional-octave digital band-pass filtering, the waveform generator is programmed to produce sine waves at the mid-band frequencies of the filter bands.

The electrical signal from the microphone 101 is amplified and converted to a low impedance signal by preamplifier 102, filtered by low-pass anti-aliasing filter 103, converted to a differential signal by differential driver 104, sampled at regular intervals and converted to digital form by analog-to-digital converter 105, and then conveyed to the serial port of DSP 116 for spectral analysis by means of a bank of 144 digital band-pass filters.

Digital filtering in DSP 116 is accomplished by three types of infinite impulse response (IIR) filters, implemented in software using 32-bit fixed-point arithmetic: (1) Twelve sixth-order 1/12th octave Butterworth band-pass filters, (2) One eighth-order inverse Chebyshev low-pass filter, and (3) One first-order adjustable time constant averaging filter. The sixth-order Butterworth band-pass filters are implemented by cascading three second-order sections, with each section being computed using the following difference equations (1), (2), and (3):

$$y(n)=B_0x(n)+w_1(n\text{-}1); \quad (1)$$

$$w_1(n)=A_1y(n)+w_2(n\text{-}1); \quad (2)$$

$$w_2(n)=A_2y(n)\text{-}B_0x(n). \quad (3)$$

Similarly, the eighth-order inverse Chebyshev low-pass filter is implemented by cascading four second-order sections, with each section being computed from the following difference equations (4), (5), and (6):

$$y(n)=B_0x(n)+w_1(n\text{-}1); \quad (4)$$

$$w_1(n)=B_1x(n)+A_1y(n)+w_2(n\text{-}1); \quad (5)$$

$$w_2(n)= B_0x(n)+A_2y(n). \quad (6)$$

where

$x(n)$=Filter Input
$y(n)$=Filter Output
$w_1(n)$, $w_2(n)$=Storage Elements
$w_1(n\text{-}1)$, $w_2(n\text{-}1)$=Previous Storage Elements
$A_1$, $A_2$, $B_0$, $B_1$=Filter Coefficients (Constants)

The filter coefficients which appear in the foregoing difference equations were computed using a commercially available software package intended for digital filter design, analysis, and simulation. Several such software packages are on the market, and the utility and use of such software will be familiar to those who are skilled in the art.

The magnitude response of a digital filter, as a function of frequency expressed in Hertz, depends on the sample rate of the data which is being processed by the filter. It is customary in the field of acoustics to work with a logarithmic frequency scale based on the octave, which denotes a frequency ratio of 2:1. Filters which operate in the highest frequency octave analyzed by DSP 116, known as the top octave, process samples received directly from ADC 105. For the top octave, the sample rate is equal to the output word rate of the ADC 105. To obtain the data for the next lower octave, the top octave samples first pass through a digital anti-aliasing filter (eighth-order inverse Chebyshev low-pass filter). Then, using a process known as decimation, the sample rate is halved by discarding every other output sample. The decimated samples are then processed by the same 1/12th octave band-pass filters used in the top octave. It is to be appreciated that although 1/12th octave filtering is being shown here, the spectral content could also be generated by the FFT method. The digital anti-aliasing filter prevents high frequency components from being folded into the frequency range covered by the band-pass filters when the sample stream is decimated. This process of low-pass filtering, decimation, and band-pass filtering is repeated until twelve octaves have been analyzed. It is to be appreciated that it is not necessary to employ 144 distinct band-pass filters to provide 1/12th octave band-pass filtering over a twelve octave range. Only twelve band-pass filters and one low-pass anti-aliasing filter are required because the filters are identical for each octave; only the sample rate changes. In order to perform filtering in real time, over the twelve octave range, DSP 116 must process and store data for each octave in the proper sequence, while new samples are continually received from ADC 105. This is accomplished with twelve filter/decimator stages which operate in a continuous loop, performing band-pass filtering for octaves 0 through 11, where octave 0 is the lowest frequency octave and octave 11 is the top octave. The first stage receives data from ADC 105, performs the octave 11 band-pass filtering, and produces band-limited input data for the second stage at a sample rate which is one-half the output word rate of the ADC 105. The second stage receives data from the first stage, performs the octave 10 band-pass filtering, and produces band-limited input data for the third stage at a sample rate which is one-fourth the output word rate of the ADC 105, and so on through the twelfth stage of filtering and decimation, which receives data from the eleventh stage at 1/2048th the output word rate of the ADC 105, and performs the octave 0 band-pass filtering (the decimated samples from the twelfth filter/decimator stage are discarded). The desired output from the digital filter analyzer just described is the time-averaged acoustic power output of each one of the 144 band-pass filters. To obtain this information, the output of each band-pass filter is first squared and then processed by a first-order adjustable time constant averaging filter. The power spectrum which results from the above computation sequence is continuously updated in real time and converted to a logarithmic (decibel) scale, for use by DSP 116 itself, or host system 112.

In another embodiment, host system 112 executes instructions related to implementing an algorithm for self-testing the acoustic monitor 100. Under control of the host system 112, the acoustic monitor 100 performs a self-test at periodic intervals by generating an acoustic test signal and comparing the acoustic power measured by the acoustic monitor at the test frequency with the acoustic power of the acoustic test signal. DSP 116 continuously transmits real-time power spectrum data to host system 112 by means of RS-485 interface 111, whether the self-test is occurring or not. Therefore, host system 112 has knowledge of the acoustic power measured by the acoustic monitor at the test frequency. Host system 112 reads the real-time power spectrum from the DSP and may also read the reference values from the NVM 115. The host system 112 processes the acoustic power of the acoustic test signal received by subtracting the test signal attenuation (dB), provided by the digitally-controlled attenuator 108, from the reference value (full-scale emitter output) at the test frequency (dB). The reference values, one for each filter band, were previously stored in non-volatile memory (NVM) 115 during self-calibration at the factory. During operation, the host system 112 reads the reference values from NVM 115, by means of DSP 116 and RS-485 interface 111. Host system 112, through RS-485 interface 111, initiates and controls the self-test by means of a communication protocol with DSP 116. At the start of the self-test, host system 112 selects the optimal test frequency by comparing the real-time power spectrum of the acoustic signal with the stored reference values and selecting the frequency, that is, the filter band, which will provide the best signal-to-noise ratio (for example, a signal-to-noise ratio exceeding a minimum threshold) during the self-test. Furthermore, as long as the minimum signal-to-noise ratio for the self-test can be achieved, the host system 112 may reduce the amplitude of the test signal, by means of digitally-controlled attenuator 108, thereby reducing the likelihood that the acoustic test signal will cause false alarms in nearby acoustic monitors. The acoustic monitor passes the self-test if the acoustic power measured by the acoustic monitor at the test frequency is equal to the calculated acoustic power of the acoustic test signal (i.e., the reference value minus the attenuation, if any), within a certain tolerance.

The acoustic monitor 100 is put into a self-calibration mode at the factory, while in a sound-proof enclosure or anechoic chamber to minimize background noise. During this time, the DSP 116, either on its own or under control of host system 112, steps the emitter through all the frequency bands, at full output, while measuring the acoustic power, one band at a time. The acoustic power for each band is stored in non-volatile memory NVM 115 (NVM), to be used as reference values for self-testing during actual operation. In general, neither the emitter nor the microphone 101 has a flat frequency response; therefore, the acoustic power for each band will be different. During the self-test, which is initiated at periodic intervals by the processor, the real-time power spectrum is first compared with the stored reference values, to select the optimal filter band, that is, the frequency, to be used for the test. The optimal filter band is the one for which the reference value, that is, the acoustic power of the emitter, exceeds the real-time power spectrum, that is, the background noise, by the greatest amount. This ensures that the self-test is performed using the best possible signal-to-noise ratio, and that the smallest possible acoustic signal can be detected, thus minimizing the likelihood that an acoustic self-test of one monitor will cause nearby monitors to false alarm. Since the decibel is a logarithmic unit, the available signal-to-noise ratio (dB), that is, the maximum that can be achieved, is simply equal to the reference value (dB) minus the background noise (dB) at the optimal test frequency. In general, the available signal-to-noise ratio will be greater than the minimum value required to reliably perform the self-test; therefore, the processor can use the digitally-controlled attenuator to reduce the output of the emitter. The minimum self-test signal-to-noise ratio (dB) can be software-selectable and determined by the user, depending on the application and environmental conditions, to ensure differentiation between the acoustic test signal and the background noise. Using the optimal test frequency, the processor activates the emitter for a period of time, while the acoustic power for the corresponding filter band is measured. To pass the self-test (acoustic integrity test), the measured acoustic power must be equal to the emitter output, for the corresponding filter band, within a certain tolerance. The emitter output (dB) is equal to the reference (full-scale) output (dB), minus the attenuation (dB) provided by the digitally-controlled attenuator. Finally, since the acoustic monitor continuously computes the real-time power spectrum of the signal received by the microphone, including the acoustic test signal if the emitter is activated, and the processor controls the frequency and amplitude of the test signal itself, it can ignore the test signal and therefore perform the critical safety function during the entire test.

The technical effects and benefits of exemplary embodiments include an acoustic monitor including an acoustic signal source for implementing a self-test. The acoustic monitor generates acoustic test signals having a frequency associated with a relatively inactive portion of the power spectrum and a sound pressure level providing an optimum signal-to-noise ratio at the test frequency. The acoustic test signal is determined by the digital signal processor, or a host system, based on the power spectrum of the background noise, in order to provide differentiation between the acoustic test signal and the background noise.

The terminology used herein is for the purpose of describing particular embodiments only and is not intended to be limiting of the invention. While the description of the present invention has been presented for purposes of illustration and description, it is not intended to be exhaustive or limited to the invention in the form disclosed. Many modifications, variations, alterations, substitutions, or equivalent arrangement not hereto described will be apparent to those of ordinary skill in the art without departing from the scope of the invention. Additionally, while the various embodiments of the invention have been described, it is to be understood that aspects of the invention may include only some of the described embodiments. Accordingly, the invention is not to be seen as being limited by the foregoing description, but is only limited by the scope of the appended claims.

**Claims**

1. An acoustic monitor, comprising:

   a digital signal processor (116);
   a memory (115); an emitter (110);
   a microphone (101) including analog signal conditioning circuitry configured to receive an acoustic test signal at a test frequency and sound pressure level (SPL) and being in signal communication with the digital signal processor (116),
   a low-pass filter (103) configured for attenuating frequencies above the frequency range of interest, generally 20 Hz to 80 kHz;
   wherein the memory (115) is configured to store a reference acoustic power of a reference acoustic signal for each frequency band, the reference acoustic power being obtained in a self-calibration mode, while in a sound-proof enclosure or anechoic chamber to minimize background noise; wherein the digital signal processor (116) is configured to step the emitter (110) through all the frequency bands, at full output, while measuring the acoustic power, one band at a time; and wherein the memory (115) is configured to store the acoustic power for each band, to be used as reference values for self-testing during actual operation; and
   wherein the digital signal processor (116) is configured
   to initiate a self-test in which the measured real-time power spectrum of the emitter (110) is first compared with the stored reference values, to select the optimal filter band, that is, the frequency, to be used for the test, wherein the optimal filter band is the one for which the reference value, that is, the acoustic power of the emitter (110), exceeds the real-time power in the spectrum of background noise, by the greatest amount; and
   to activate the emitter (110) using the optimal test frequency for a period of time, while the acoustic power for the corresponding filter band is measured; wherein to pass the self-test, the measured acoustic power must be equal to the emitter (110) output, for the corresponding filter band, within a certain tolerance.

2. The acoustic monitor of claim 1, wherein the emitter (110) is configured to generate the acoustic test signal at a test frequency and sound pressure level (SPL) in response to the computing of the real-time acoustic power spectrum by the digital signal processor (116).

3. The acoustic monitor of claim 1, wherein the acoustic monitor is configured to generate the acoustic test signal having a signal-to-noise ratio that exceeds a minimum threshold.

4. The acoustic monitor of claim 1, wherein the microphone (101) including analog signal conditioning circuitry is configured to generate a differential analog signal representative of the acoustic test signal within a frequency range spanning a plurality of octaves.

5. The acoustic monitor of claim 4 wherein the acoustic monitor includes an analog-to-digital converter (105) that is configured to sample the differential analog signal at regular intervals and to convert it to a stream of digital samples.

6. The acoustic monitor of claim 5 wherein the digital signal processor (116) is configured to process the stream of digital samples from the analog-to-digital converter (105) continuously and in real time using a plurality of fractional-octave digital band-pass filters to obtain a real-time power spectrum of the acoustic test signal.

7. The acoustic monitor of claim 2, wherein the emitter (110) is a piezoelectric transducer.

8. The acoustic monitor of claim 1, further comprising a host system (112) in communication with the digital signal processor (116) of the acoustic monitor (100), which is configured to initiate and control the self-test.

9. A method of self-testing an acoustic monitor, comprising:

   storing a reference acoustic power of a reference acoustic signal for each frequency band, the reference acoustic power being obtained in a self-calibration mode, while in a sound-proof enclosure or anechoic chamber to minimize background noise, wherein a digital signal processor (116) steps an emitter (110) through all the frequency bands, at full output, while measuring the acoustic power, one band at a time, and wherein the acoustic power for each band is stored in a memory (115), to be used as reference values for self-testing during actual operation;

receiving an acoustic test signal at a test frequency and sound pressure level (SPL), by a microphone (101) which is in signal communication with the digital signal processor (116), attenuating frequencies above the frequency range of interest, generally 20 Hz to 80 kHz, by a low-pass filter (103); and

initiating, by the digital signal processor (116), a self-test in which the measured real-time power spectrum of the emitter (110) is first compared with the stored reference values, to select the optimal filter band, that is, the frequency, to be used for the test, wherein the optimal filter band is the one for which the reference value, that is, the acoustic power of the emitter (110), exceeds the real-time power in the spectrum of the background noise, by the greatest amount; and activating the emitter (110) using the optimal test frequency for a period of time, by the digital signal processor (116),

while the acoustic power for the corresponding filter band is measured; wherein to pass the self-test, the measured acoustic power must be equal to the emitter (110) output, for the corresponding filter band, within a certain tolerance.

10. The method of claim 9, further comprising generating the acoustic test signal having a signal-to-noise ratio exceeding a minimum threshold in response to the computing of the real-time acoustic power spectrum by the digital signal processor (116), the generating of the acoustic test signal being performed by the emitter (110).

11. The method of claim 9, further comprising generating a differential analog signal representative of the acoustic test signal within a frequency range spanning a plurality of octaves.

12. The method of claim 11 further comprising sampling the differential analog signal at regular intervals and converting it to a stream of digital samples.

13. The method of claim 12, further comprising processing the stream of digital samples continuously and in real time using a plurality of fractional-octave digital band-pass filters and obtaining a real-time power spectrum of the acoustic test signal.

14. The method of claim 9 wherein the emitter (110) is a piezoelectric transducer.

15. The method of claim 9 further comprising computing a real-time power spectrum of the acoustic test signal received by the microphone (101); or wherein a host system (112) in communication with the digital signal processor (116) of the acoustic monitor (100) initiates and controls the self-test.

**Patentansprüche**

1. Akustischer Monitor, der Folgendes umfasst:

einen digitalen Signalprozessor (116);
einen Speicher (115);einen Emitter (110);
ein Mikrofon (101), das eine Analogsignalaufbereitungsschaltung beinhaltet, die dazu konfiguriert ist, ein akustisches Testsignal mit einer Testfrequenz und einem Schalldruckpegel (SPL) zu empfangen, und in Signalkommunikation mit dem digitalen Signalprozessor (116) steht,
einen Tiefpassfilter (103), der dazu konfiguriert ist, Frequenzen oberhalb des Frequenzbereichs von Interesse, im Allgemeinen 20 Hz bis 80 kHz, zu dämpfen;
wobei der Speicher (115) dazu konfiguriert ist, eine Referenzschallleistung eines akustischen Referenzsignals für jedes Frequenzband zu speichern, wobei die Referenzschallleistung in einem Selbstkalibrierungsmodus in einem schallisolierten Gehäuse oder einer schalltoten Kammer erhalten wird, um ein Hintergrundrauschen zu minimieren; wobei der digitale Signalprozessor (116) dazu konfiguriert ist, den Emitter (110) bei voller Ausgabeleistung alle Frequenzbänder durchlaufen zu lassen, während er die Schallleistung der Bänder nacheinander misst; und wobei der Speicher (115) dazu konfiguriert ist, die Schallleistungen für jedes Band, die als Referenzwerte zum Selbsttesten während des tatsächlichen Betriebs verwendet werden sollen, zu speichern; und
wobei der digitale Signalprozessor (116) zu Folgendem konfiguriert ist:

Initiieren eines Selbsttests, in dem das gemessene Echtzeitleistungsspektrum des Emitters (110) zunächst mit den gespeicherten Referenzwerten verglichen wird, um das optimale Filterband, das heißt die Frequenz, die für den Test verwendet werden soll, auszuwählen, wobei das optimale Filterband dasjenige ist, für welches der Referenzwert, das heißt die Schallleistung des Emitters (110) die Echtzeitleistung in dem Hintergrundrauschspektrum um den größten Betrag überschreitet; und
Aktivieren des Emitters (110) unter Verwendung der optimalen Testfrequenz für eine Zeitspanne, während die Schallleistung für das entsprechende Filterband gemessen wird; wobei die gemessene Schallleistung, um den Selbsttest zu bestehen, für das entsprechende Filterband innerhalb einer bestimmten Toleranz gleich der Ausgabe des Emitters (110) sein muss.

2. Akustischer Monitor nach Anspruch 1, wobei der Emitter (110) dazu konfiguriert ist, das akustische Testsignal als Reaktion auf das Berechnen des Echtzeitschallleistungsspektrums durch den digitalen Signalprozessor (116) mit einer Testfrequenz und einem Schalldruckpegel (SPL) zu erzeugen.

3. Akustischer Monitor nach Anspruch 1, wobei der akustische Monitor dazu konfiguriert ist, das akustische Testsignal zu erzeugen, das ein Signal-Rausch-Verhältnis aufweist, das einen Mindestschwellenwert überschreitet.

4. Akustischer Monitor nach Anspruch 1, wobei das Mikrofon (101), das die Analogsignalaufbereitungsschaltung beinhaltet, dazu konfiguriert ist, ein differenzielles analoges Signal zu erzeugen, das repräsentativ für das akustische Testsignal ist, innerhalb eines Frequenzbereichs, der eine Vielzahl von Oktaven überspannt.

5. Akustischer Monitor nach Anspruch 4, wobei der akustische Monitor einen Analog-Digital-Konverter (105) beinhaltet, der dazu konfiguriert ist, das differenzielle analoge Signal in regelmäßigen Intervallen abzutasten und es in einen Strom von digitalen Abtastungen umzuwandeln.

6. Akustischer Monitor nach Anspruch 5, wobei der digitale Signalprozessor (116) dazu konfiguriert ist, den Strom von digitalen Abtastungen von dem Analog-Digital-Konverter (105) kontinuierlich und in Echtzeit unter Verwendung einer Vielzahl von Teiloktaven-Digitalbandpassfiltern zu verarbeiten, um ein Echtzeitleistungsspektrum des akustischen Testsignals zu erhalten.

7. Akustischer Monitor nach Anspruch 2, wobei es sich bei dem Emitter (110) um einen piezoelektrischen Wandler handelt.

8. Akustischer Monitor nach Anspruch 1, ferner umfassend ein Hostsystem (112), das in Kommunikation mit dem digitalen Signalprozessor (116) des akustischen Monitors (100) steht und welches dazu konfiguriert ist, den Selbsttest zu initiieren und zu steuern.

9. Verfahren zum Selbsttesten eines akustischen Monitors, das Folgendes umfasst:

Speichern einer Referenzschallleistung eines akustischen Referenzsignals für jedes Frequenzband, wobei die Referenzschallleistung in einem Selbstkalibrierungsmodus in einem schallisolierten Gehäuse oder einer schalltoten Kammer erhalten wird, um ein Hintergrundrauschen zu minimieren, wobei ein digitaler Signalprozessor (116) einen Emitter (110) alle Frequenzbänder bei voller Ausgabeleistung durchlaufen lässt, während er die Schallleistung der Bänder nacheinander misst, und wobei die Schallleistungen für jedes Band in einem Speicher (115) gespeichert werden, um während des tatsächlichen Betriebs als Referenzwerte zum Selbsttesten verwendet zu werden;
Empfangen eines akustischen Testsignals mit einer Testfrequenz und einem Schalldruckpegel (SPL) durch ein Mikrofon (101), welches in Signalkommunikation mit dem digitalen Signalprozessor (116) steht,
Dämpfen von Frequenzen oberhalb des Frequenzbereichs von Interesse, im Allgemeinen 20 Hz bis 80 kHz, durch einen Tiefpassfilter (103); und
Initiieren eines Selbsttests durch den digitalen Signalprozessor (116), in welchem das gemessene Echtzeitleistungsspektrum des Emitters (110) zunächst mit den gespeicherten Referenzwerten verglichen wird, um das optimale Filterband, das heißt die Frequenz, die für den Test verwendet werden soll, auszuwählen, wobei das optimale Filterband dasjenige ist, für welches der Referenzwert, das heißt die Schallleistung des Emitters (110), die Echtzeitleistung in dem Hintergrundrauschspektrum um die größte Menge überschreitet; und
Aktivieren des Emitters (110) unter Verwendung der optimalen Testfrequenz für eine Zeitspanne durch den digitalen Signalprozessor (116), während die Schallleistung für das entsprechende Filterband gemessen wird; wobei die gemessene Schallleistung, um den Selbsttest zu bestehen, für das entsprechende Filterband innerhalb einer bestimmten Toleranz gleich der Ausgabe des Emitters (110) sein muss.

10. Verfahren nach Anspruch 9, ferner umfassend das Erzeugen des akustischen Testsignals, das ein Signal-Rausch-Verhältnis aufweist, das einen Mindestschwellenwert überschreitet, als Reaktion auf das Berechnen des Echtzeitschallleistungsspektrums durch den digitalen Signalprozessor (116), wobei das Erzeugen des akustischen Testsignals durch den Emitter (110) durchgeführt wird.

11. Verfahren nach Anspruch 9, ferner umfassend das Erzeugen eines differenziellen analogen Signals, das repräsentativ für das akustische Testsignal ist, innerhalb eines Frequenzbereichs, der eine Vielzahl von Oktaven überspannt.

**12.** Verfahren nach Anspruch 11, ferner umfassend das Abtasten des differenziellen analogen Signals in regelmäßigen Intervallen und dessen Umwandeln in einen Strom von digitalen Abtastungen.

**13.** Verfahren nach Anspruch 12, ferner umfassend das Verarbeiten des Stroms von digitalen Abtastungen auf kontinuierliche Weise und in Echtzeit unter Verwendung einer Vielzahl von Teiloktaven-Digitalbandpassfiltern und das Erhalten eines Echtzeitleistungsspektrums des akustischen Testsignals.

**14.** Verfahren nach Anspruch 9, wobei es sich bei dem Emitter (110) um einen piezoelektrischen Wandler handelt.

**15.** Verfahren nach Anspruch 9, ferner umfassend das Berechnen eines Echtzeitleistungsspektrums des akustischen Testsignals, das von dem Mikrofon (101) empfangen wird; oder wobei ein Hostsystem (112), das in Kommunikation mit dem digitalen Signalprozessor (116) des akustischen Monitors (100) steht, den Selbsttest initiiert und steuert.

**Revendications**

**1.** Dispositif de surveillance acoustique, comprenant :

un processeur de signal numérique (116) ;
une mémoire (115) ; un émetteur (110) ;
un microphone (101) comprenant un circuit de conditionnement de signal analogique conçu pour recevoir un signal de test acoustique à une fréquence de test et un niveau de pression acoustique (SPL) et étant en communication de signal avec le processeur de signal numérique (116),
un filtre passe-bas (103) conçu pour atténuer les fréquences situées au-dessus de la plage de fréquences d'intérêt, généralement de 20 Hz à 80 kHz ;
dans lequel la mémoire (115) est conçue pour stocker une puissance acoustique de référence d'un signal acoustique de référence pour chaque bande de fréquences, la puissance acoustique de référence étant obtenue dans un mode d'auto-étalonnage, tout en étant dans une enceinte insonorisée ou une chambre anéchoïque pour minimiser le bruit de fond ; dans lequel le processeur de signal numérique (116) est conçu pour faire passer l'émetteur (110) à travers toutes les bandes de fréquences, à pleine sortie, tout en mesurant la puissance acoustique, une bande à la fois ; et dans lequel la mémoire (115) est conçue pour stocker la puissance acoustique pour chaque bande, à utiliser comme valeurs de référence pour un auto-examen pendant le fonctionnement réel ; et
dans lequel le processeur de signal numérique (116) est conçu

pour lancer un auto-examen dans lequel le spectre de puissance en temps réel mesuré de l'émetteur (110) est d'abord comparé aux valeurs de référence stockées, pour sélectionner la bande de filtre optimale, c'est-à-dire la fréquence, à utiliser pour le test, dans lequel la bande de filtre optimale est celle pour laquelle la valeur de référence, c'est-à-dire la puissance acoustique de l'émetteur (110), dépasse la puissance en temps réel dans le spectre du bruit de fond, de la valeur la plus élevée ; et
pour activer l'émetteur (110) en utilisant la fréquence de test optimale pendant une période de temps, tandis que la puissance acoustique pour la bande de filtre correspondante est mesurée ; dans lequel pour réussir l'auto-examen, la puissance acoustique mesurée doit être égale à la sortie de l'émetteur (110), pour la bande de filtre correspondante, dans une certaine tolérance.

**2.** Dispositif de surveillance acoustique selon la revendication 1, dans lequel l'émetteur (110) est conçu pour générer le signal de test acoustique à une fréquence de test et un niveau de pression acoustique (SPL) en réponse au calcul du spectre de puissance acoustique en temps réel par le processeur de signal numérique (116).

**3.** Dispositif de surveillance acoustique selon la revendication 1, dans lequel le dispositif de surveillance acoustique est conçu pour générer le signal de test acoustique ayant un rapport signal/bruit qui dépasse un seuil minimum.

**4.** Dispositif de surveillance acoustique selon la revendication 1, dans lequel le microphone (101) comprenant des circuits de conditionnement de signal analogique est conçu pour générer un signal analogique différentiel représentatif du signal de test acoustique dans une plage de fréquences s'étendant sur une pluralité d'octaves.

**5.** Dispositif de surveillance acoustique selon la revendication 4, dans lequel le dispositif de surveillance acoustique comprend un convertisseur analogique-numérique (105) qui est conçu pour échantillonner le signal analogique différentiel à intervalles réguliers et pour le convertir en un flux d'échantillons numériques.

**6.** Dispositif de surveillance acoustique selon la revendication 5, dans lequel le processeur de signal numérique (116) est conçu pour traiter le flux d'échantillons numériques du convertisseur analogique-numérique (105) en continu et en temps réel en utilisant une pluralité de filtres passe-bande numériques à octaves fractionnaires pour obtenir un spectre de puissance en temps réel du signal de test acoustique.

7. Dispositif de surveillance acoustique selon la revendication 2, dans lequel l'émetteur (110) est un transducteur piézoélectrique.

8. Dispositif de surveillance acoustique selon la revendication 1, comprenant en outre un système hôte (112) en communication avec le processeur de signal numérique (116) du dispositif de surveillance acoustique (100), qui est conçu pour lancer et contrôler l'auto-examen.

9. Procédé d'auto-examen d'un dispositif de surveillance acoustique, comprenant :

le stockage d'une puissance acoustique de référence d'un signal acoustique de référence pour chaque bande de fréquences, la puissance acoustique de référence étant obtenue dans un mode d'auto-étalonnage, tout en étant dans une enceinte insonorisée ou une chambre anéchoïque pour minimiser le bruit de fond, dans lequel un processeur de signal numérique (116) fait passer un émetteur (110) à travers toutes les bandes de fréquences, à pleine puissance, tout en mesurant la puissance acoustique, une bande à la fois, et dans lequel la puissance acoustique de chaque bande est stockée dans une mémoire (115), pour être utilisée comme valeurs de référence pour l'auto-examen pendant le fonctionnement réel ;
la réception d'un signal de test acoustique à une fréquence de test et un niveau de pression acoustique (SPL), par un microphone (101) qui est en communication de signal avec le processeur de signal numérique (116),
l'atténuation des fréquences supérieures à la plage de fréquences d'intérêt, généralement de 20 Hz à 80 kHz, par un filtre passe-bas (103) ; et
le lancement, par le processeur de signal numérique (116), d'un auto-examen dans lequel le spectre de puissance en temps réel mesuré de l'émetteur (110) est d'abord comparé aux valeurs de référence stockées, pour sélectionner la bande de filtre optimale, c'est-à-dire la fréquence, à utiliser pour le test, dans lequel la bande de filtre optimale est celle pour laquelle la valeur de référence, c'est-à-dire la puissance acoustique de l'émetteur (110), dépasse la puissance en temps réel dans le spectre du bruit de fond, de la valeur la plus élevée ; et
l'activation de l'émetteur (110) en utilisant la fréquence de test optimale pendant une période de temps, par le processeur de signal numérique (116), tandis que la puissance acoustique pour la bande de filtre correspondante est mesurée ; dans lequel pour réussir l'auto-examen, la puissance acoustique mesurée doit être égale à la sortie de l'émetteur (110), pour la bande de filtre correspondante, dans une certaine tolérance.

10. Procédé selon la revendication 9, comprenant en outre la génération du signal de test acoustique ayant un rapport signal/bruit dépassant un seuil minimum en réponse au calcul du spectre de puissance acoustique en temps réel par le processeur de signal numérique (116), la génération du signal de test acoustique étant réalisée par l'émetteur (110).

11. Procédé selon la revendication 9, comprenant en outre la génération d'un signal analogique différentiel représentatif du signal de test acoustique dans une plage de fréquences s'étendant sur une pluralité d'octaves.

12. Procédé selon la revendication 11, comprenant en outre l'échantillonnage du signal analogique différentiel à intervalles réguliers et sa conversion en un flux d'échantillons numériques.

13. Procédé selon la revendication 12, comprenant en outre le traitement du flux d'échantillons numériques en continu et en temps réel en utilisant une pluralité de filtres passe-bande numériques à octaves fractionnaires et en obtenant un spectre de puissance en temps réel du signal de test acoustique.

14. Procédé selon la revendication 9, dans lequel l'émetteur (110) est un transducteur piézoélectrique.

15. Procédé selon la revendication 9, comprenant en outre le calcul d'un spectre de puissance en temps réel du signal de test acoustique reçu par le microphone (101) ; ou
dans lequel un système hôte (112) en communication avec le processeur de signal numérique (116) du dispositif de surveillance acoustique (100) lance et contrôle l'auto-examen.

FIG. 1

EP 2 798 346 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006191341 A1